(19) Europäisches Patentamt / European Patent Office / Office européen des brevets

(11) **EP 2 799 602 A2**

(12) **EUROPEAN PATENT APPLICATION**

(43) Date of publication:
05.11.2014 Bulletin 2014/45

(51) Int Cl.:
*D03D 11/00* (2006.01)    *D03D 7/00* (2006.01)
*B60R 21/16* (2006.01)

(21) Application number: **14171273.7**

(22) Date of filing: **26.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: 28.12.2007  KR 20070140299
28.12.2007  KR 20070140301
28.12.2007  KR 20070140302
28.12.2007  KR 20070140303
28.12.2007  KR 20070140304

(62) Document number(s) of the earlier application(s) in accordance with Art. 76 EPC:
**08866577.3 / 2 227 577**

(71) Applicant: **Kolon Industries, Inc.**
**Kyungki-do 427-709 (KR)**

(72) Inventors:
• **Youn, Jung-Hoon**
**730-140 Gyeongsangbuk-do (KR)**
• **Kwak, Dong-Jin**
**706-180 Daegu (KR)**
• **Kim, Hee-Jun**
**701-764 Daegu (KR)**
• **Lee, Sang-Kil**
**312-801 Choongnam (KR)**
• **Lee, Sang-Mok**
**730-762 Gyeongsangbuk-do (KR)**
• **Kim, Jae-Hyung**
**730-796 Gyeongsangbuk-do (KR)**
• **Kim, Ki-Jeong**
**770-090 Gyeongsangbuk-do (KR)**

(74) Representative: **Ter Meer Steinmeister & Partner Patentanwälte**
**Mauerkircherstrasse 45**
**81679 München (DE)**

Remarks:
This application was filed on 05-06-2014 as a divisional application to the application mentioned under INID code 62.

(54)  **An inflatable fabrics and an air-bag**

(57)  The present invention relates to an inflatable double-layered fabric, including an inflating part having gas inflatability;
a non-inflating part supporting the inflating part; and
a co-woven part constituting a boundary between the inflating part and the non-inflating part,
wherein the inflating part is composed of two separated fabric layers, and the non-inflating part includes a stepwise co-woven weave that is co-woven stepwise and alternately, and the weave of the co-woven part includes a 2X2 weave, a 3X3 weave, a stain weave, a partially co-woven weave of two separated fabric layers, or a mixed weave of at least one thereof, which is co-woven with 13 or more yarns in at least one direction.

## Fig. 2b

EP 2 799 602 A2

**Description**

**BACKGROUND OF THE INVENTION**

**(a) Field of the Invention**

The present invention relates to a inflatable double-layered fabric, and more particularly to a inflatable double-layered fabric that is useful for a car airbag or a life jacket.

**(b) Description of the Related Art**

An inflatable fabric is useful for a car airbag, a life jacket, and the like. Particularly, the inflatable fabric is used to a side curtain airbag that is unfolded on the side window of a vehicle during an accident, in order to protect a driver's or a passenger's head from being injured by the window or side frame of the vehicle when the vehicle overturns and rolls over. The side curtain airbag should maintain the inflated state for at least 5 seconds when the vehicle rolls over, in order to protect a passenger safely during the accident, and the inflatable fabric is useful in this case.

The methods of preparing the product having inflatability, such as airbag for vehicles, are mainly classified into a method of sewing, fusing, or adhering two fabrics and a method of using a double-layered fabric wherein two layers of fabrics are partially combined with co-woven points.

However, the methods of sewing two fabrics, fusing by heat or supersonic treating, and adhering with an adhesive, i.e., the first method as described above, need additional sewing, fusing, and adhering processes after preparing two layers of fabrics, and thus there are problems of that the process becomes complicated and the manufacturing cost increases also.

To resolve the problems, the method for preparing air-inflatable product such as airbag by using an inflatable double-layered fabric, i.e., the second method as described above, has recently been attempted.

The double-layered fabric is inflatable by gas such as air, and has two separated fabric layers and co-woven points for combining two separated fabric layers. The fabric has a system, i.e., an inflating part, closed by the co-woven points. Specifically, the co-woven points take a role of firmly combining two separated fabric layers, when the fabric is rapidly inflated by gas such as air, so that the gas should not be leaked at the part of combining two separated fabric layers. Thus, a 3X3 basket weave or a 2X2 basket weave has mainly been used for the weave of the co-woven part in the double-layered fabric. Furthemore, the double-layered fabric has a non-inflated part fixed the boundaries by the co-woven part. The non-inflated part is for supporting the inflating part. For the non-inflated part, two separate fabic layers of the inflating part that is centered on the co-woven point are maintained or the plain weave and the like has generally been used.

However, although a 3X3 or 2X2 basket weave is used for the weave of the co-woven part of the double-layered fabrics according to the above methods, there are problems that a gas leakage is generated at the co-woven part, when the separate two layers is inflated by gas, and an air permeability goes up accordingly. Therefore, the studies for improving the problems are required.

**SUMMARY OF THE INVENTION**

An object of the present invention is to solve the problems described above and provide a double-layered fabric that has superior internal pressure maintaining property, durability, and stability, and an airbag including the same.

In order to attain the object, the present invention provides an inflatable double-layered fabric, including an inflating part having gas inflatability, a non-inflating part supporting the inflating part, and a co-woven part constituting a boundary between the inflating part and the non-inflating part, wherein the inflating part is composed of two separated fabric layers, and the weave of the co-woven part is set up at a nk+1 pixel from the width or length end of the double-layered fabric (where, k is 2 or 3, and n is 0 or a positive number) when dividing the double-layered fabric into a plurality of pixels.

The present invention also provides a method of preparing the inflatable double-layered fabric, including the steps of drawing a primary design of each weave of the inflating part, the non-inflating part, and the co-woven part with a magnification of 1/k (where, k is 2 or 3) of the whole weave, and applying the primary design to a weaving process with a magnification of k (where, k is 2 or 3).

The present invention also provides an inflatable double-layered fabric including an inflating part having gas inflatability, a non-inflating part supporting the inflating part, and a co-woven part constituting a boundary between the inflating part and the non-inflating part, wherein the inflating part is composed of two separated fabric layers, and the non-inflating part includes a stepwise co-woven weave that is co-woven stepwise and alternately.

The present invention also provides an airbag including the double-layered fabric.

## BRIEF DESCRIPTION OF THE DRAWINGS

Fig. 1 shows (a) a complete weave diagram of the double-layered fabric that is composed of a double-layered weave having two separate plain weave faces, and (b) an extended pattern of the same, according to one embodiment of the present invention.

Figs. 2a and 2b are cross sections of a weave organizing the double-layered fabric according to one embodiment of the present invention.

Figs. 3a and 3b are cross sections showing the inflated state of the air inflatable double-layered fabric according to one embodiment of the present invention.

Fig. 4 shows (a) a weave diagram of a 2X2 basket weave constituting the co-woven part of the double-layered fabric, and (b) a cross section of the same, according to one embodiment of the present invention.

Fig. 5 shows (a) a weave diagram of a partially co-woven weave combined with a plain weave constituting the co-woven part of the double-layered fabric, and (b) a cross section of the same, according to one embodiment of the present invention.

Fig. 6 shows (a) a weave diagram constituting the co-woven part of the double-layered fabric where a 2X2 basket weave is normally inserted, and (b) a weave diagram constituting the co-woven part of the double-layered fabric where a 2X2 basket weave is abnormally inserted.

Fig. 7 shows (a) a complete weave diagram of a stepwise co-woven weave where a double-layered weave and a 2X2 basket weave are co-woven stepwise and alternately, and (b) an extended pattern of the same, according to one embodiment of the present invention.

Fig. 8 shows (a) a weave diagram of a 2X2 basket weave and a cross section thereof, (b) a weave diagram of a partially co-woven weave and a cross section thereof, and (c) a weave diagram of a stain weave and a cross section thereof, which are constituting the co-woven part of the double-layered fabric according to one embodiment of the present invention.

Fig. 9 shows complete weave diagrams of (a) a plain weave corresponding to the left or right separated layer part centered on the co-woven point, and (b) an enantiomorph weave thereof, according to one embodiment of the present invention.

Fig. 10 shows complete weave diagrams of (a) to (c) warp rib weaves and (d) to (f) weft rib weaves of the co-woven part according to one embodiment of the present invention.

Fig. 11 is a complete weave diagram of an irregular basket weave at the co-woven part of the double-layered fabric according to one embodiment of the present invention.

Fig. 12 shows complete weave diagrams of (a) a 2X2 basket weave, (b) a 2X2 warp rib weave, (c) a 2X2 weft rib weave, and (d) a 1X1 plain weave, which are used for the co-woven part of the double-layered fabric according to one embodiment of the present invention.

Fig. 13 is a schematic drawing showing a device for monitering the internal pressure of an airbag according to one embodiment of the present invention.

<Explanations for signs of the principal parts of the drawings>

A: weave of the left separated layer part
B: weave of the right separated layer part
C: co-woven point

## DETAILED DESCRIPTION OF THE EMBODIMENTS

Hereinafter, the air inflatable double-layered fabric according to detailed embodiments of the present invention, the airbag including the same, and the method of preparing the same are explained in more detail. However, they are merely presented as an example of the present invention, and thus it is clearly understood to a person skilled in the art that the scope of the present invention is not limited to the detailed embodiments and various modifications and executions are possible according to the embodiments within the scope of the present invention.

Firstly, the double-layered fabric and the airbag including the same of the present invention are explained in more detail as disclosed below with reference to the drawings annexed.

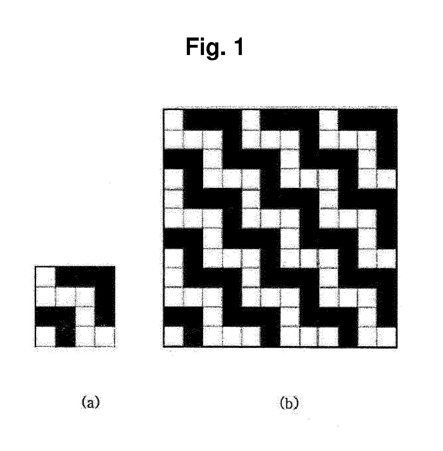

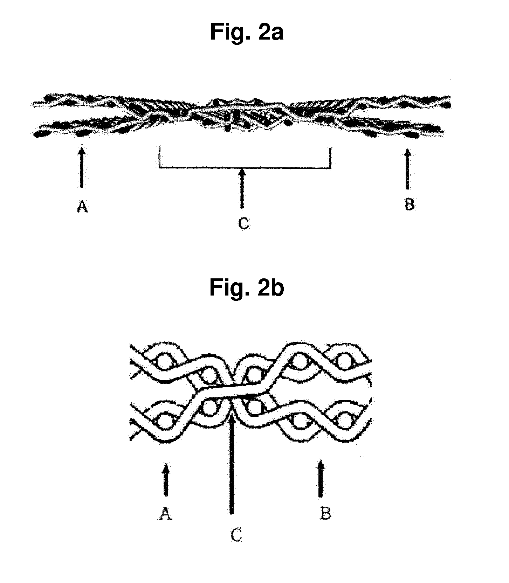

Fig. 1 shows (a) a complete weave diagram of the double-layered fabric that is composed of double-layered weave having two separate plain weave faces, and (b) an extended pattern of the same. Figs. 2a and 2b are cross sections of a weave organizing the double-layered fabric of the present invention.

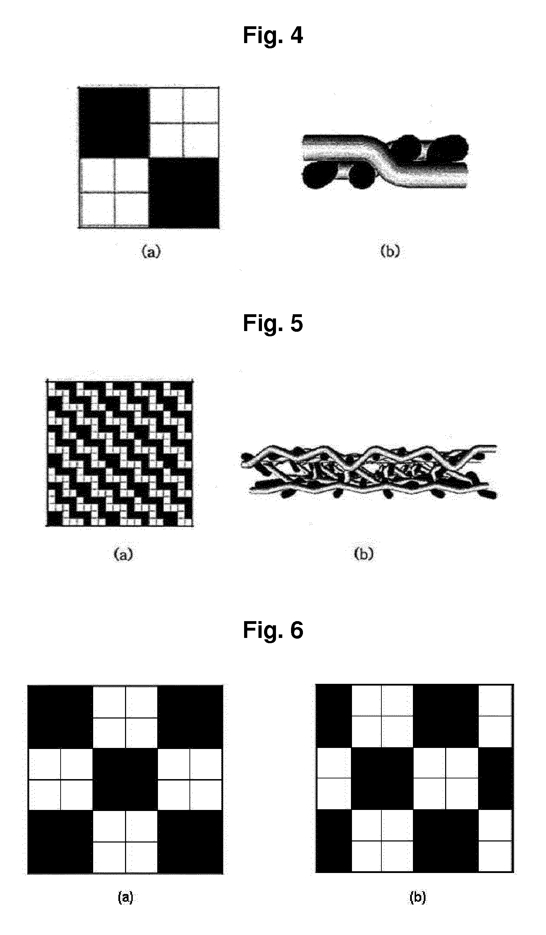

As shown in Figs. 2a and 2b, the double-layered fabric of the present invention is composed of the parts of separated layers **A, B** that are two separated fabric layers, and a co-woven point C that are co-woven between two separated fabric layers. In an inflatable double-layered fabric of the present invention, two separated fabirc layers having plain weave (**A** and **B** in Figs. 2a to 3b) are woven simultaneously, and the co-woven part (**C** in Figs. 2a to 3b) is woven so as to include a 2X2 basket weave (Fig. 4), a 3X3 basket weave, a partially co-woven weave of a plain double-layered weave (Fig. 5), or a mixed weave of at least one thereof, by using a jacquard loom.

The fabric layers of the present invention have gas inflatability for the main aim. Particularly, the co-woven part prevents the inflating gas from leaking between two separated fabric layers and takes a role of standing against the pressure of the inflating gas.

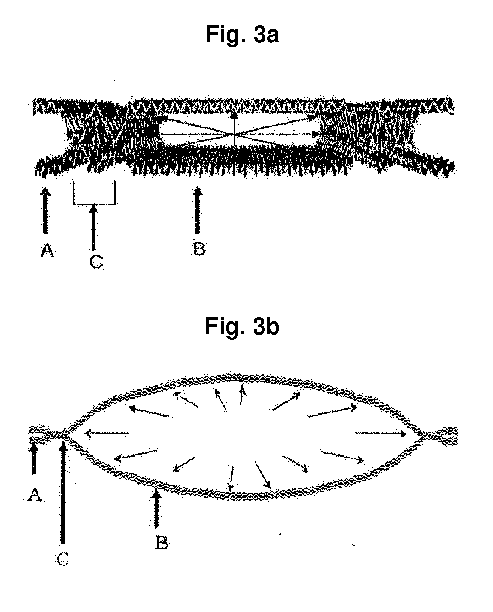

The fabric including the weave that is separated into a upper layer and a lower layer and the weave that combines the layers can be divided into the weaves of the separated layers (**A** and **B** in Figs. 2a to 3b) and the co-woven weave (**C** in Figs. 2a to 3b). Also, the fabric may include a trisecting structure. The strcutre consists of an area closed by the separated layers (**B** in Figs. 3a and 3b), i.e., an inflatable area, a co-woven area (**C** in Figs. 2a to 3b), and an area that is unrelated to the inflatability (**A** in Figs. 3a and 3b) such as an external area of the closed area with the co-woven area, according to arrangements of the patterns.

The weave of the left separated layer part **A** that is on the left of the co-woven point and the weave of the right separated layer part **B** that is on the right of the co-woven point in Figs. 2a and 2b are illustrated in Fig. 1. Furthermore, the left and right parts are divided by the weave of the co-woven part **C.**

The inflating part of the present invention having gas inflatability can be prepared in a form of a double-layered weave as illustrated as **B** in Figs. 3a and 3b through a conventional method. Preferably, the inflating part having gas inflatability includes two separated fabric layers that are simultaneously woven by using a loom.

Furthermore, two separated fabric layers of the inflating part having gas inflatability are combined together by and at the co-woven part. That is, the co-woven part forms a boundary between the inflating part and the non-inflating part, as illustrated as C in Figs. 3a and 3b. It is preferable that the circumference of two separated fabric layers is partially co-woven into a single fabric so that the co-woven part seals hermetically the inflating part having gas inflatability.

In the present invention, the co-woven part **C** means a woven point, a woven line, or a woven face where two separated fabric layers of the separated layer parts **A, B** join together and form one layer. The co-woven part, i.e., the woven point, the woven line, or the woven face of two separated fabric layers may be formed by combining the warp of the upper layer with the weft of the lower layer, the weft of the upper layer with the warp of the lower layer, the warp of the lower layer with the weft of the upper layer, or the weft of the lower layer with the warp of the upper layer. The weave organizing the co-woven part is called a co-woven weave, and it is called a co-woven point when the co-woven weave is represented as a point, it is called a co-woven line when the co-woven weave is represented as a line, and it is called a co-woven face when the co-woven weave is represented as a face. The co-woven point, the co-woven line, and the co-woven face are called the co-woven part altogether. Furthermore, the woven point means a part constituting the fabric where the warp and the weft are crossed up and down each other.

According to one embodiment of the present invention, the present invention provides an inflatable double-layered fabric, including an inflating part having gas inflatability, a non-inflating part supporting the inflating part, and a co-woven part constituting a boundary between the inflating part and the non-inflating part, wherein the inflating part is composed of two separated fabric layers, and the weave of the co-woven part is set up at a nk+1 pixel from the width or length end of the double-layered fabric (where, k is 2 or 3, and n is 0 or a positive number) when dividing the double-layered fabric into a plurality of pixels.

According to the embodiment, the present invention can make the manufacturing process effective when preparing a final product for absorbing shock like an airbag, and can inhibit the air leakage maximumly when the part of separated layers is inflated by air, because the combining force of the co-woven part is firm. Furthermore, the gas inflatable double-layered fabric according to one embodiment of the present invention can make the manufacturing process effective when preparing a final product for absorbing shock like an airbag, and can inhibit the air from leaking when the part of separated layers is inflated by air, because the combining force of the co-woven part is firm.

Particularly, the present inventors revealed that it can be prevented that the weave pattern of the co-woven part consisting of 4 or more pixels are abnormally inserted, the properties such as the internal pressure maintaining property and the like can be improved, and the double-layered fabric and the airbag having superior performance can be provided through more effective weaving process by making the co-woven weave starts at a nk+1 pixel from the width or length end of the double-layered fabric (where, k is 2 or 3, and n is 0 or a positive number), when dividing the double-layered fabric into a plurality of pixels during designing the weave of the double-layered fabric, and accomplished the invention according to the embodiment.

In the inflatable double-layered fabric according to one embodiment of the present invention, a 2X2 basket weave (Fig. 4), a 3X3 basket weave, a partially co-woven weave of a double-layered weave (Fig. 5), or a mixed weave of at least one thereof may be used to the co-woven weave as illustrated in Figs. 4 and 5, and a weave having a pattern using 4 or more pixels can be used to the co-woven part without limitation.

Furthermore, the starting point of the co-woven weave can be controlled effectively so that the starting point is uniformly fixed at an odd-number based on the weave pixels of the whole weaves, through a method of preparing the double-layered fabric including the steps of drawing a primary design of each weave of the inflating part, the non-inflating part, and the co-woven part with a magnification of 1/k (where, k is 2 or 3) of the whole weave, and applying the primary design to a weaving process with a magnification of k (where, k is 2 or 3).

For example, if the magnification of the primary design is 1/2 or less during the drawing step and the primary design is applied to the weaving process by magnifying the same 2 or more times, odd pixel and even pixel of the primary design are changed into even numbers altogether, and the weave of the co-woven part can be controlled to set up at the $2n+1$ pixel (where, n is 0 or a positive number), that is 1st, 3rd, 5th, 7th, and so on, from the width end or the length end of the double-layered fabric, and thus the internal pressure maintaining performance can be improved because it can be prevented that the weave pattern consisting of 4 more pixels is abnormally inserted therein.

The non-inflatable part takes a role of supporting the inflating part in the double-layered fabric according to one embodiment of the present invention, and it can be composed of a two separated fabric layer part and a partially co-woven part dividing the same. Furthermore, the non-inflating part includes the remaining parts except the inflating part having gas inflatability and the co-woven part combining the same, and it can be made by partially co-weaving the inflatable fabric through a common method, so that the tension of whole fabric is to be uniform. In addition to, it is also possible to make the part between the co-woven part and the partially co-woven part to be composed of a two separated fabric layer part, so that the co-woven part and the partially co-woven part may not be folded each other in the non-inflatable part.

The present invention also provides a method of preparing the inflatable double-layered fabric, including the steps of drawing a primary design of each weave of the inflating part, the non-inflating part, and the co-woven part with a magnification of 1/k (where, k is 2 or 3) of the whole weave, and applying the primary design to a weaving process with a magnification of k (where, k is 2 or 3).

Particularly, in the double-layered fabric according to one embodiment of the present invention, the layers that are separated the upper and lower are the double-layered weaves that is composed of the plain weaves constituting the upper and lower layers (Fig. 1). The weave of the co-woven part should be controlled to be set up at a $nk+1$ pixel from the width or length end of the double-layered fabric (where, k is 2 or 3, and n is 0 or a positive number) in the double-layered fabric, so that the weave pattern consisting of 4 more pixels is normally inserted therein. It is possible to prevent gas from leaking when the double-layered fabric organized like this is inflated by gas like air.

In the co-woven part of the embodiment of the invention, the normally inserting of the weave pattern consisting of 4 more pixels means that 2 or more warps and 2 or more wefts are crossed each other so as to form a basket weave as illustrated in Fig. 6a. If the weave pattern of 4 more pixels is set up at the other pixel than a $nk+1$ pixel, namely, it is abnormally inserted as illustrated in Fig. 6b, the basket weave such as a 2X2 weave and the like is not formed in proper order, and a 1X2 weave or a 2X1 weave, like a warp rib weave or a weft rib weave is inserted therein. Thus, it has weak points in the co-woven part and the strength of the co-woven weave becomes weak, and then the gas may leak.

Furthermore, the method of organizing the weave of the dividing point of the two layers or the starting point of the co-woven part disclosed above is the most important factor for designing the gas inflatable fabric, because it is very important for the airtightness of the double-layered fabric that the elongation against the tension by high-pressure air is kept to be a minimum.

The present invention also provides a inflatable double-layered fabric including an inflating part having gas inflatability, a non-inflating part supporting the inflating part, and a co-woven part constituting a boundary between the inflating part and the non-inflating part, wherein the inflating part is composed of two separated fabric layers, and the non-inflating part includes a stepwise co-woven weave that is co-woven stepwise and alternately, according to the other embodiment of the invention.

According to the other embodiment of the invention, the present invention can make the manufacturing process effective when preparing a final product for absorbing shock like an airbag, and can inhibit the air leakage maximumly when the part of separated layers is inflated by air by strengthening the combining force due to the co-woven part and the non-inflating part.

Particularly, the present inventors revealed that the gas leaking phenomenon at the co-woven part can maximumly be prevented because the gas can get out stepwise even at the non-inflating part when the inflating part of the double-layered fabric is inflated by air, the properties such as the internal pressure maintaining property and the like can be improved, and the double-layered fabric and the airbag having superior performance can be provided through more effective weaving process, by the method of organizing the weave of the non-inflatable part of the double-layered fabric to be a stepwise co-woven weave that is co-woven stepwise and alternately, and accomplished the present invention.

The stepwise co-woven weave in the inflatable double-layered fabric according to the other embodiment of the invention may be what is co-woven stepwise and alternately with a double-layered fabric including two separated fabric layers and a weave selected from the group consisting of a 1X1 weave, a 2X2 weave, a 3X3 weave, a stain weave, a partially co-woven weave of double-layered fabric, and a mixed weave of at least one thereof.

The non-inflating part, in the double-layered fabric according to the other embodiment of the present invention, includes the remaining parts except the inflating part having gas inflatability and the co-woven part combining the same, and takes a role of supporting the inflating part. The inflatable double-layered fabric of the present invention is characterized in that the co-woven part is reinforced by organizing the non-inflating part with the stepwise co-woven weave and the airtightness of the inflating part having gas inflatability is strengthened. Furthermore, the tension of the whole fabric can be equalized by organizing the non-inflating part with the stepwise co-woven weave.

In the other embodiment of the invention, particularly, "stepwise co-woven weave" means one kind of a partially co-woven weave that two separated fabric layers in the non-inflating part such as illustrated the separated layer part **A** in Figs. 2a and 2b is partially co-woven into a single fabric. Specifically, the stepwise co-woven weave means that a partially co-woven weave is arranged stepwise and alternately and a discontinuous co-woven part is included though stepwise alternate co-weaving. In the non-inflating part of the present invention, the stepwise co-woven weave can maintain the alternate co-weaving of the co-woven layer of the single fabric and two separated fabric layers stepwisely. Also, the stepwise co-woven weave can be applied in multiple lines, or in various forms of a honeycomb, a radial shape, a circle, an ellipsoid, a triangle, a trapezoid, and so on.

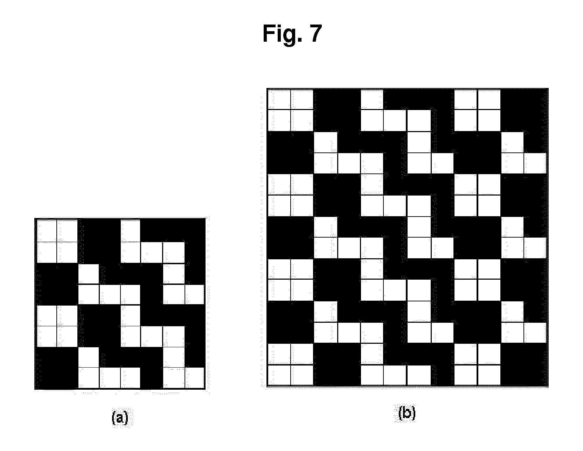

The non-inflating part according to the other embodiment of the invention is what includes "stepwise co-woven weave" that is co-woven stepwise and alternately with layers of two separated fabric layers as illustrated in Fig. 7.

The width of the co-woven weave combining two separated fabric layers is preferably about 0.3 to 2.5 mm, more preferably about 0.5 to 2 mm, and the most preferably about 0.7 to 1.5 mm, in the stepwise co-woven weave. Furthermore, the width of the co-woven weave of the stepwise co-woven weave may be 1 to 12 pixels, in view of the pixels of yarns, more preferably 2 to 9 pixels, and the most preferably 3 to 7 pixels, when dividing the double-layered fabric into a plurality of pixels. When the width of the co-woven weave of the stepwise co-woven weave is less than 0.3 mm, the internal air can leak out when the airbag is inflated by air injected therein and it is difficult to secure the effective internal pressure maintaining rate to the airbag. On the other hand, when the width of the co-woven weave of the stepwise co-woven weave is more than 2.5 mm, it is difficult to weave because an excessive tension is applied to the double-layered fabric including the non-inflating part.

Furthermore, the continuing length of the co-woven weave to one direction is preferably about 1 to 10 mm, preferably about 4 to 7 mm, and the most preferably about 5 to 6 mm, in the stepwise co-woven weave. When the continuing length to one direction is less than 1 mm in the stepwise co-woven weave, there is of a short effect of blocking the internal air when the airbag is inflated, and when the continuing length to one direction, particularly to warp direction, is more than 10 mm in the stepwise co-woven weave, it is difficult to weave because an excessive tension is applied to the double-layered fabric including the non-inflating part.

In the stepwise co-woven weave, the gap between the co-woven parts, that is a width of the layers of double-layered fabric, may be 3 to 35 mm, and preferably 5 to 30 mm, and the most preferably 10 to 25 mm. Furthermore, the gap between the co-woven parts may be about 10 to 150 pixels, in view of the pixels of yarns, and more preferably about 20 to 130 pixels, and the most preferably about 40 to 110 pixels, when dividing the double-layered fabric into a plurality of pixels. If the gap between the co-woven parts is less than 3 mm, it is difficult to weave the double-layered fabric because an excessive tension due to the non-inflating part becomes excessive, and if the gap between the co-woven parts is more than 35 mm, the internal air can leak out when the airbag is inflated by air injected therein and it may be difficult to secure the effective internal pressure maintaining rate to the airbag.

Furthermore, the fabric layers according to the other embodiment of the invention have gas inflatability for the chief aim, and particularly the co-woven part prevents the inflating gas from leaking between two separated fabric layers, and takes a role of standing against the pressure of the inflating gas. The co-woven part combines the inflating part having gas inflatability that is composed of the double-layered weave, and forms a boundary between the inflating part and the non-inflating part.

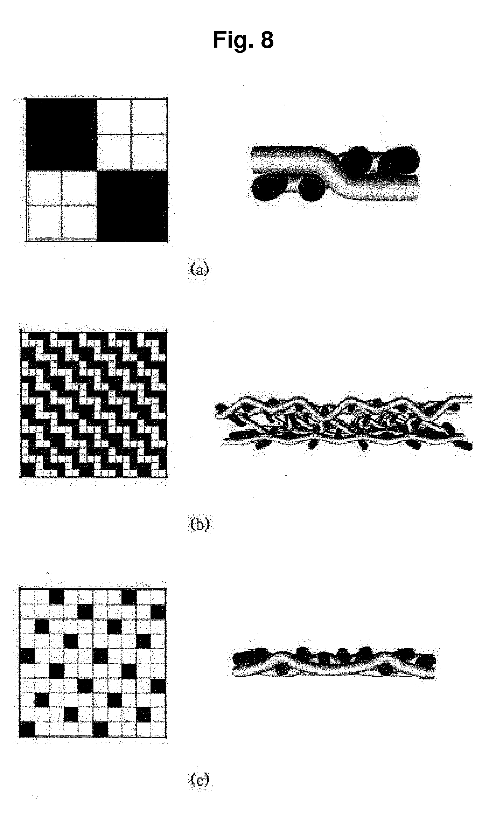

In the other embodiment of the invention, the weave of the co-woven part may include a 2X2 or 3X3 weave (Fig. 8a), a stain weave (Fig. 8b), a partially co-woven weave of double-layered fabric (Fig. 8c), and a mixed weave of at least one thereof, those are co-woven with 13 or more yarns.

Here, it is preferable that the circumference of two separated fabric layers is partially co-woven into a single fabric so that the co-woven part seals hermetically the inflating part having gas inflatability. Particularly, it is preferable that the co-woven part is composed of at least 13 or more yarns so that the co-woven part is firmly maintained, the leakage of the air is effectively inhibited, and the air sneaking away from the bag can be blocked during air inflating.

Furthermore, in the other embodiment of the invention, the co-woven part may include an enantiomorph weave where two separated fabric layers are co-woven while forming an enantiomorph centered on an intersecting point. Here, the co-woven part can be obtained by co-weaving two layers of fabrics while forming an enantiomorph centered on the intersecting point of the co-woven part C that combines the fabrics. At this time, the co-woven point may be repeated 2 or more times, and preferably 3 to 6 times, in order to make the co-woven point more firm. It is more profitable because the air sneaking away from the bag can be blocked in this case.

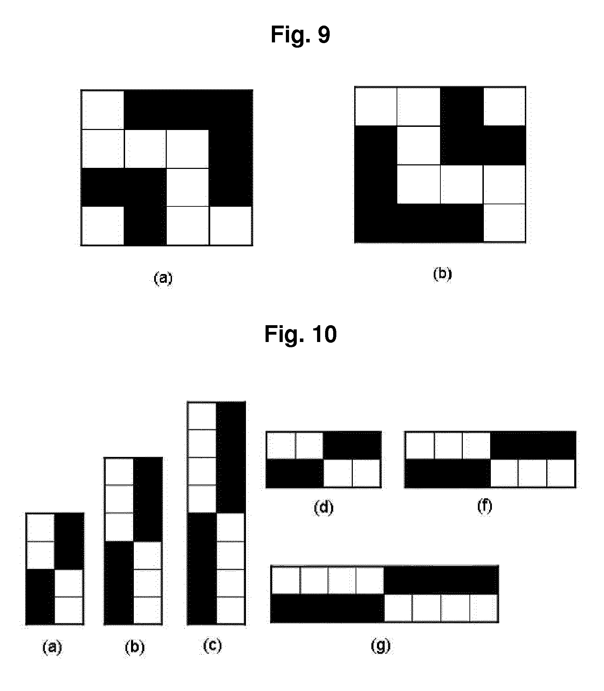

Particularly, the co-woven weave of the double-layered fabric of the present invention can be obtained by forming an enantiomorph like in Fig. 9 centered on the co-woven part with the upper and lower weaves of the double-layered weave as illustrated in Figs. 2a and 2b, and it is possible to prevent gas from leaking when the double-layered fabric is inflated by gas like air by forming two or more co-woven points contiguously.

Furthermore, in the other embodiment of the invention, the co-woven part may include a warp rib weave, a weft rib weave, or a mixed weave thereof, those have a width of 4 or more yarns to the warp or weft direction. Here, the co-woven part can be composed of the part consisting of the warp rib weave as illustrated in Figs. 10a to 10c, the part consisting of the weft rib weave as illustrated in Figs. 10d to 10f, and the part where the warp rib weave and the weft rib weave are used together.

For the co-woven effect, the warp rib weave and the weft rib weave may have a width of 4 or more yarns to the warp or weft direction. A 2X2 weave, a 3X3 weave, or a 4X4 weave like in Figs. 10a to 10c can be used as the warp rib weave, and a 2X2 weave, a 3X3 weave, or a 4X4 weave like in Figs. 10d to 10f can be used as the weft rib weave.

Furthermore, when arranging the warp rib weave in a long line to the warp direction or arranging the weft rib weave in a line to the weft direction, same 2X2 weave, 3X3 weave, or 4X4 weave can be used jointly. As disclosed above, the present invention can inhibit the air leakage maximumly and improve the weaving property by improving the strength of the co-woven part by arranging the warp rib weave and the weft rib weave in the co-woven weave

In the other embodiment of the invention, the weave of the co-woven part that forms the co-woven line to the warp direction may be the warp rib weave, and the weave of the co-woven part that forms the co-woven line to the weft direction may be the weft rib weave. Furthermore, the main weave of the co-woven part of which the co-woven line is a curved line may be the warp rib weave, and the assistant weave thereof may be the weft rib weave. On the other hand, when the main weave of the co-woven part of which the co-woven line is a curved line is the weft rib weave, the assistant weave thereof may be the warp rib weave.

When organizing the pattern of the double fabric according to the other embodiment of the invention, it is possible to make the weave of the co-woven part firm by inserting the warp rib weave into the pattern of the warp direction and the weft rib weave into the pattern of the weft direction as the co-woven weaves. In other words, when the co-woven part is arranged in a long line to the warp direction, the weave of the co-woven part may include the warp rib weave as the main weave, and when the warp rib weave is excessively included, the weft rib weave may be used together as the assistant weave in order to minimize the hauling phenomenon.

As an example of the other embodiment of the invention, it is preferable to form the co-woven part by using the weft rib weave together, when the warp rib weave has the width of 8 or more yarns to the warp direction. At this time, if the warp rib weave is excessively arranged in the width direction without using the weft rib weave together, the irregularity of the weft of the co-woven part gets severe during the weaving process, and the weft snaps terribly and the weaving property may largely be deteriorated because the excessive hauling phenomenon is generated in the weft.

Furthermore, it is preferable to form the co-woven part by using the warp rib weave together, when the weft rib weave has the width of 8 or more yarns to the weft direction. If the weft rib weave is arranged excessively in the length direction without using the warp rib weave together, the warp snaps terribly and the weaving property may largely be deteriorated because the excessive hauling phenomenon is generated in the warp.

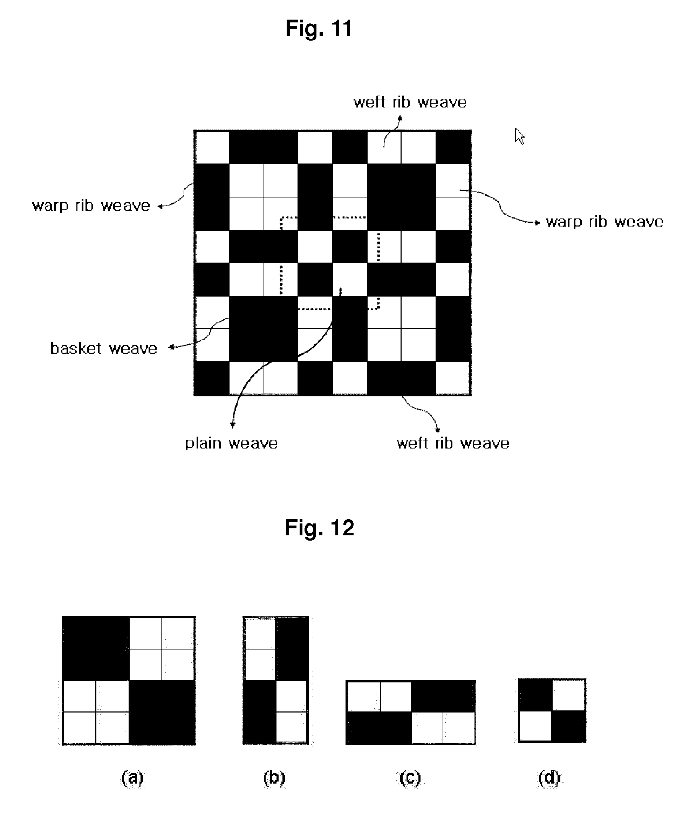

In the other embodiment of the invention, the co-woven part may include irregular basket weaves where the warp rib weaves are arranged to the warp direction between the basket weaves, the weft rib weaves are arranged to the weft direction, and a 1X1 plain weave is arranged at the point where the warp rib weave and the weft rib weave meet. Here, the co-woven part strengthens the combining force by forming the irregular basket weave as illustrated in Fig. 11.

More concretely, the co-woven weave can be formed into the irregular basket weave as illustrated in Fig. 11. The irregular basket weave is composed of a basket weave, a warp rib weave, a weft rib weave, and a 1X1 plain weave. Particularly, the warp rib weaves as illustrated in Fig. 12b is arranged to the warp direction between the basket weaves as illustrated in Fig. 12a, and the weft rib weaves as illustrated in Fig. 12c is arranged to the weft direction, and the 1X1 plain weave as illustrated in Fig. 12d is arranged at the point where the warp rib weave and the weft rib weave meet together, in the irregular basket weave as illustrated in Fig. 11. In other words, the co-woven part is composed of a basket weave, a warp rib weave, a weft rib weave, and a plain weave, and preferably composed of a 2X2 basket weave, a 2X2 warp rib weave, a 2X2 weft rib weave, and a 1X1 plain weave, and they can be repeated in order of the basket weave and the rib weave and in order of the rib weave and the plain weave.

Furthermore, the co-woven part may have the width consisting of the warps and the wefts of 8 or more yarns, and may have the width consisting of the warps and the wefts of 4 or more yarns at minimum. However, it is preferable that the co-woven part includes the irregular basket weave consisting of the warps and the wefts of 8 or more yarns in order to secure the firmness of the co-woven part.

As disclosed above, the combining force of the co-woven part can be increased and the air leakage can maximumly be inhibited during air inflating by arranging the 2X2 basket weave, the 2X2 warp rib weave, the 2X2 weft rib weave, and the 1X1 plain weave having same path length to the warp and the weft directions as the weave of the co-woven part.

Furthermore, the co-woven part may be combined more firmly by using the weave having 4 or more yarns, and preferably 8 or more yarns, to the warp and the weft directions as the warp rib weave and the weft rib weave in the co-woven weave.

In the present invention, the materials of the yarns used in the double-layered weave, the single layered weave, the partially co-woven weave, and the stepwise co-woven weave are not limited particularly, however, any one selected from the group consisting of nylon 66, polyethyleneterephthalate (PET), polypropylene, and a polyester is preferable.

Furthermore, the air inflatable double-layered fabric may include a resin layer coated on the face of the same in order to reduce the air leakage. The resin used for the coated layer may be a conventional resin used for a fiber coating, and a resin including a silicone resin, a urethane resin, or a mixture thereof is preferable, and the silicone resin coating is more preferable to maintain the airtightness and the strength during inflating.

The resin coating is for filling up the gap of the double-layered fabric effectively, and it can be applied to one face or two faces of the fabric. A conventional coating method, like a knife coating method, a doctor blade method, a spray coating method, and the like, can be used as the coating method, and the knife coating method is used preferably. Furthermore, a multi-step coating where the coating is carried out many times can be used to the coating method. When a under coating and a top coating are used together as the multi-step coating, not only the airtightness is increased but also the flexibility can effectively be improved because it reduces the thickness of the fabric compared with the coated amount. Particularly, it is preferable to coat the under coating and the top coating covering 2 times on the same face of the fabric.

At this time, the amount of the resin coated is preferably 30 g/m$^2$ to 150 g/m$^2$. When the coated amount is less than 30 g/m$^2$, there is much air leakage of the airbag and it is impossible to maintain the inflated state for 5 seconds or more with a certain pressure after inflating. Furthermore, when the coated amount is more than 150 g/m$^2$, the airbag can not show its ability because not only the airbag gets thick and the storage property gets worse but also the airbag contacts to the frame when it is inflated.

As disclosed above, the method of organizing the weave of the dividing point of the two layers or the starting point of the co-woven part disclosed above is the most important factor for designing the gas inflatable fabric, because it is very important for the airtightness of the double-layered fabric that the elongation against the tension by high-pressure air is kept to be a minimum.

Furthermore, the double-layered fabric of the present invention resolved the problems by using a plain weave that has high elongation resistance against an external tension as the fabric layer, and the airtightness of the airbag can be increased by weaving the same with high density so that the cover factor of one fabric layer is 1900 or more, according to the following Calculation Formula 1. When the cover factor is less than 1900, there is a problem of that the air leaks out easily during the air inflating:

Calculation Formula 1

$$\text{Cover Factor (CF)} = \text{warp density (yarns/inch)} \times \sqrt{(\text{warp denier})} + \text{weft density (yarns/inch)} \times \sqrt{(\text{weft denier})}.$$

It is preferable that the thickness of one fabric layer constituting the gas inflatable double-layered fabric of the present invention, that is measured by the ASTM D 1777 method, is 0.5 mm or less, and the stiffness that is measured by the ASTM D 4032 circular band method is 3.5 kgf or less. If the thickness of each fabric layer is more than 0.5 mm, it is not easy to set up the airbag inside a vehicle. Moreover, if the stiffness value is more than 3.5 kgf, the airbag for vehicles may not inflate normally from the air pressure.

When measuring the internal pressure of the airbag after injecting gas with an instant pressure of 25 bar, the double-layered fabric of the present invention has the initial maximum pressure in the inflating part of 40 KPa or more, and the pressure after 6 seconds of 25 KPa or more for it to function as a side curtain airbag. The seam strength of the co-woven part (C in Fig. 2) measured by the ASTM D 5822 method should be at least 1000 N/5cm in order to prevent tearing of the airbag when the side curtain airbag is inflated by high temperature and high pressure, and the elongation at break that is measured by the ASTM D 5822 method should be 50% or less in order to minimize air leakage at the co-woven part during inflation and prevent melting of the fabric by high temperature. Particularly, because a side curtain airbag requires a relatively higher coating amount than general airbags, it is very important to maintain its strength for a long time even after the fabric has been worn by vibration of the vehicle.

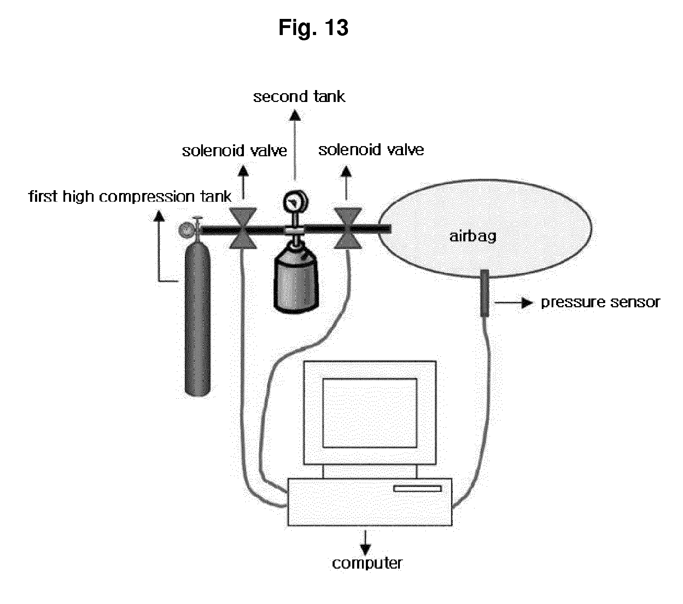

In a preferable example of the present invention, the internal pressure of the airbag can be measured by using a device as illustrated in Fig. 13. The measuring device is controlled to open the first solenoid valve by the computer so that nitrogen gas is filled in the second tank till 25 bar by opening solenoid valve, after filling nitrogen gas into the first high compression tank with high pressure. When the second tank has been filled, the compressed nitrogen gas filled in the second tank with the pressure of 25 bar is instantly injected into the airbag that is maintaining atmospheric pressure and inflates the airbag, by closing the first solenoid valve and opening the second solenoid valve by the computer. The initial maximum pressure in the airbag at this time is measured through a pressure sensor and the result is transferred to the computer, and the pressure after several seconds is measured again and recorded in the computer.

Therefore, the double-layered fabric of the present invention satisfies above conditions and the initial maximum pressure in the inflating part may be 40 KPa or more when the gas is injected therein with an instant pressure of 25 bar, the pressure after 6 seconds may be 25 KPa or more, the seam strength of the co-woven part may be 1000 N or more, and the elongation at break may be 50% or less.

The present invention can also provide an airbag for vehicles prepared by including the gas inflatable double-layered fabric. The airbag may preferably be a curtain airbag.

The airbag can be prepared by a method including the steps of coating a resin layer on one face of the gas inflatable double-layered fabric and drying the same; and coating a resin layer on the other face of the gas inflatable double-layered fabric and drying the same.

As described above, the gas inflatable double-layered fabric of the present invention can minimize air leakage during inflation, so that it is useful for car airbags, life jackets, and other shock-absorbing products. In addition, since the double-layered fabric of the present invention requires no sewing, the manufacture process can be simplified, and thus the manufacture cost can be reduced.

The matters except that disclosed above are not particularly limited because they may be added or subtracted according to the necessity in the present invention.

Hereinafter, the present invention is described in further detail through examples. However, the following examples are only for the understanding of the present invention and the scope of the present invention is not limited to or by them.

**[EXAMPLES]**

Physical properties of the double-layered fabric of the present invention were measured as follows.

a) Measurement for internal pressure of the double-layered fabric airbag:
As illustrated in Fig. 13, change of the pressure in the inflating part of the airbag was measured according to a time slot after inflating the airbag by injecting compressed nitrogen gas of 25 bar therein as air. An electronic control device was used here in order to control the operations of injecting and blocking air, because it is preferable to minimize an error by controlling the operations electronically.

b) Cover factor:
Calculated by the following Equation 1.

[Calculation Formula 1]

$$\text{Cover Factor (CF)} = \text{warp density (yarns/inch)} \times \sqrt{(\text{warp denier})} + \text{weft density (yarns/inch)} \times \sqrt{(\text{weft denier})}.$$

c) Stiffness:
Measured by the ASTM D 4032 circular band method.
d) Thickness of one fabric layer:
Measured by the ASTM D 1777 method.
e) Seam strength:
Measured by the ASTM D 5822 method.
f) Elongation at break:
Measured by the ASTM D 5822 method.

**Example 1**

The double-layered fabric was prepared with polyamide multi-filaments having 420 denier as the warps and the wefts in a jacquard loom, according to the method of drawing a primary design of each weave of the inflating part, the non-inflating part, and the co-woven part with a magnification of 1/2 of the whole weave, and applying the primary design to a weaving process by magnifying the same 2 times. As illustrated in Fig. 2, the double-layered fabric that was divided by the co-woven part **C** composed of the 2X2 basket weave of 20 yarns as illustrated in Fig. 4 was prepared, wherein the left separated parts layers **A** centered on the co-woven point **C** was composed of the double-layered weave as illustrated in Fig. 1, and the weave of the co-woven part was fixed to start from the first pixel from the width end or the length end of the double-layered fabric through the steps of drawing the primary design and applying the primary design to the weaving process by magnifying the same 2 times, as disclosed above.

At this time, the warp density was 57 yarns/inch, the weft density was 49 yarns/inch, and the cover factor was 3,176. Subsequently, both faces of the double-layered fabric were coated with a silicone resin of 95 $g/m^2$ according to a common method in order to stop air from leaking out of the co-woven point, or the weaving point organizing separate two layers. The fabric was cut, and the thickness of one fabric layer, the stiffness, and the seam strength were measured according to above method. The stiffness measured was 1.18 kgf, the thickness of one fabric layer was 0.39 mm, and the seam strength was 1731 N. Furthermore, the initial maximum pressure was 68 KPa when the gas is injected therein with an instant pressure of 25 bar, and the pressure after 6 seconds was 48 KPa.

## Example 2

The double-layered fabric was prepared with polyamide multi-filaments having 315 denier as the warps and the wefts in a jacquard loom, according to the method of drawing a primary design of each weave of the inflating part, the non-inflating part, and the co-woven part with a magnification of 1/2 of the whole weave, and applying the primary design to a weaving process by magnifying the same 2 times. As illustrated in Fig. 2, the double-layered fabric that was divided by the co-woven part **C** composed of the 2X2 basket weave of 20 yarns as illustrated in Fig. 4 was prepared, wherein the weave of the left separated parts layers **A** centered on the co-woven point **C** was composed of the double-layered weave as illustrated in Fig. 1, and the weave of the co-woven part was fixed to start from the first pixel from the width end or the length end of the double-layered fabric through the steps of drawing the primary design and applying the primary design to the weaving process by magnifying the same 2 times, as disclosed above.

At this time, the warp density and weft density were 60 yarns/inch, and the cover factor was 2,129. Subsequently, both faces of the double-layered fabric were coated with a silicone resin of 95 $g/m^2$ according to a common method in order to stop air from leaking out of the co-woven point, or the weaving point organizing separate two layers. The fabric was cut, and the thickness of one fabric layer, the stiffness, and the seam strength were measured according to above method. The stiffness measured was 0.6 kgf, the thickness of one fabric layer was 0.33 mm, and the seam strength was 1259 N. Furthermore, the initial maximum pressure was 60 KPa when the gas is injected therein with an instant pressure of 25 bar, and the pressure after 6 seconds was 34 KPa.

## Example 3

The double-layered fabric was prepared substantially according to the same method as in Example 2, except that the coated amount of the silicone resin was 75 $g/m^2$.

The thickness of one fabric layer, the stiffness, and the seam strength were measured according to above method. The stiffness measured was 0.58 kgf, the thickness of one fabric layer was 0.31 mm, and the seam strength was 1235 N. Furthermore, the initial maximum pressure was 54 KPa when the gas is injected therein with an instant pressure of 25 bar, and the pressure after 6 seconds was 28 KPa.

## Example 4

The double-layered fabric was prepared substantially according to the same method as in Example 1, except that the coated amount of the silicone resin was 75 $g/m^2$.

The thickness of one fabric layer, the stiffness, and the seam strength were measured according to above method. The stiffness measured was 1.13 kgf, the thickness of one fabric layer was 0.37 mm, and the seam strength was 1520 N. Furthermore, the initial maximum pressure was 63 KPa when the gas is injected therein with an instant pressure of 25 bar, and the internal pressure after 6 seconds was 38 KPa.

## Example 5

The double-layered fabric was prepared substantially according to the same method as in Example 1, except that each weave of the inflating part, the non-inflating part, and the co-woven part was drawn into a primary design having a magnification of 1/3 of the whole weave, and the primary design was magnified 3 times and applied to the weaving process, so that the double-layered fabric was prepared to be 3X3 basket weave of 40 yarns as illustrated in Fig. 4.

The thickness of one fabric layer, the stiffness, and the seam strength were measured according to above method. The stiffness measured was 1.18 kgf, the thickness of one fabric layer was 0.39 mm, and the seam strength was 1732 N. Furthermore, the initial maximum pressure was 55 KPa when the gas is injected therein with an instant pressure of 25 bar, and the pressure after 6 seconds was 40 KPa.

**Comparative Example 1**

The double-layered fabric was prepared substantially according to the same method as in Example 1, except that any magnification was not applied and the pattern was designed in a real size in the steps of drawing the primary design and applying the same to the weaving process, and the double fabric was prepared by fixing the weave of the co-woven part to start from the second pixel from the width end or the length end of the double-layered fabric. The double-layered fabric of which the weave of the co-woven part was composed of the 2X2 basket weave, the warp density was 57 yarns/inch, and the weft density was 49 yarns/inch was prepared by using polyamide multi-filaments having 420 denier as the warps and the wefts in a jacquard loom. Subsequently, the fabric was cut after coating both faces of the double-layered fabric with a silicone resin with 2 steps (the coated amount: 95 g/m$^2$), and then the thickness of one fabric layer, the stiffness, and the seam strength were measured according to above method. The stiffness measured was 1.18 kgf, the thickness of one fabric layer was 0.39 mm, and the seam strength was 1120 N. Furthermore, the initial maximum pressure was 54 KPa when the gas is injected therein with an instant pressure of 25 bar, and the pressure after 6 seconds was 23 KPa. At this time, it was shown that the internal pressure after 6 seconds considerably decreases, and there may be a problem of inferior performance to protect passengers when it is used to a car airbag.

**Comparative Example 2**

The double-layered fabric was prepared substantially according to the same method as in Example 4, except that any magnification was not applied and the pattern was designed in a real size in the steps of drawing the primary design and applying the same to the weaving process, and the double fabric was prepared by fixing the weave of the co-woven part to start from the second pixel from the width end or the length end of the double-layered fabric.
The thickness of one fabric layer, the stiffness, and the seam strength were measured according to above method. The stiffness measured was 1.13 kgf, the thickness of one fabric layer was 0.37 mm, and the seam strength was 1100 N. Furthermore, the initial maximum pressure was 52 KPa when the gas is injected therein with an instant pressure of 25 bar, and the pressure after 6 seconds was 20 KPa. At this time, it was shown that the internal pressure after 6 seconds considerably decreases, and there may be a problem of inferior performance to protect passengers when it is used to a car airbag.

**Example 6**

The double-layered fabric was prepared with polyamide multi-filaments having 420 denier as the warps and the wefts in a jacquard loom. As illustrated in Fig. 2, the double-layered fabric was prepared so that the weave of the left part of separated layers **A** of the non-inflating part centered on the co-woven point **C** was composed of the stepwise co-woven weave where the double-layered weave and the 2X2 basket weave were co-woven stepwise and alternately as illustrated in Fig. 5, the weave of the right part of separated layers **B** was composed of the double-layered weave as illustrated in Fig. 1, and the fabric was divided by the co-woven part **C** composed of the partially co-woven weave of the 2X2 basket weave and the plain double-layered weave of 20 yarns.
At this time, the warp density was 57 yarns/inch, the weft density was 49 yarns/inch, and the cover factor was 3,176. Subsequently, both faces of the double-layered fabric were coated with a silicone resin of 95 g/m$^2$ according to a common method in order to stop air from leaking out of the co-woven point, or the weaving point organizing separate two layers. The fabric was cut, and the thickness of one fabric layer, the stiffness, and the seam strength were measured according to above method. The stiffness measured was 1.18 kgf, the thickness of one fabric layer was 0.39 mm, and the seam strength was 1731 N. Furthermore, the initial maximum pressure was 68 KPa when the gas is injected therein with an instant pressure of 25 bar, and the pressure after 6 seconds was 34 KPa.

**Example 7**

The double-layered fabric was prepared substantially according to the same method as in Example 6, except that polyamide multi-filaments having 315 denier were used.
At this time, the warp density and weft density were 60 yarns/inch, and the cover factor was 2,129. Subsequently, both faces of the double-layered fabric were coated with a silicone resin of 95 g/m$^2$ according to a common method in order to stop air from leaking out of the co-woven point, or the weaving point organizing separate two layers. The fabric was cut, and the thickness of one fabric layer, the stiffness, and the seam strength were measured according to above method. The stiffness measured was 0.6 kgf, the thickness of one fabric layer was 0.33 mm, and the seam strength was 1259 N. Furthermore, the initial maximum pressure was 60 KPa when the gas is injected therein with an instant pressure of 25 bar, and the pressure after 6 seconds was 34 KPa.

### Example 8

The double-layered fabric was prepared substantially according to the same method as in Example 6, except that the weave of the left separated parts layers **A** of the non-inflating part centered on the co-woven point **C** was composed of the stepwise co-woven weave where the double-layered weave and the 1X1 basket weave were co-woven stepwise and alternately as illustrated in Fig. 5.
The thickness of one fabric layer, the stiffness, and the seam strength were measured according to above method. The stiffness measured was 1.18 kgf, the thickness of one fabric layer was 0.39 mm, and the seam strength was 1731 N. Furthermore, the initial maximum pressure was 66 KPa when the gas is injected therein with an instant pressure of 25 bar, and the pressure after 6 seconds was 45 KPa.

### Example 9

The double-layered fabric was prepared substantially according to the same method as in Example 6, except that the weave of the left separated parts layers **A** of the non-inflating part centered on the co-woven point C was composed of the stepwise co-woven weave where the double-layered weave and the 3X3 basket weave were co-woven stepwise and alternately as illustrated in Fig. 5.
The thickness of one fabric layer, the stiffness, and the seam strength were measured according to above method. The stiffness measured was 1.18 kgf, the thickness of one fabric layer was 0.39 mm, and the seam strength was 1731 N. Furthermore, the initial maximum pressure was 69 KPa when the gas is injected therein with an instant pressure of 25 bar, and the pressure after 6 seconds was 44 KPa.

### Example 10

The double-layered fabric was prepared substantially according to the same method as in Example 6, except that the coated amount of the silicone resin was 75 g/m$^2$.
The thickness of one fabric layer, the stiffness, and the seam strength were measured according to above method. The stiffness measured was 1.13 kgf, the thickness of one fabric layer was 0.37 mm, and the seam strength was 1520 N. Furthermore, the initial maximum pressure was 63 KPa when the gas is injected therein with an instant pressure of 25 bar, and the pressure after 6 seconds was 38 KPa.

### Example 11

The double-layered fabric was prepared substantially according to the same method as in Example 7, except that the coated amount of the silicone resin was 75 g/m$^2$.
The thickness of one fabric layer, the stiffness, and the seam strength were measured according to above method. The stiffness measured was 0.58 kgf, the thickness of one fabric layer was 0.31 mm, and the seam strength was 1235 N. Furthermore, the initial maximum pressure was 54 KPa when the gas is injected therein with an instant pressure of 25 bar, and the pressure after 6 seconds was 28 KPa.

### Example 12

The double-layered fabric was prepared with polyamide multi-filaments having 420 denier as the warps and the wefts in a jacquard loom. The double-layered fabric was prepared so that the weave illustrated in Fig. 1 was used to the separate two layers of the double-layered fabric, the co-woven part was composed of the weave where the enantiomorph weave illustrated in Fig. 4 was repeated 6 times, and the non-inflating part was composed of the stepwise co-woven weave where the double-layered weave and the 2X2 basket weave were co-woven stepwise and alternately as illustrated in Fig. 5.
At this time, the warp density was 57 yarns/inch, the weft density was 49 yarns/inch, and the cover factor was 3,176. Subsequently, both faces of the double-layered fabric were coated with a silicone resin of 95 g/m$^2$ according to a common method in order to stop air from leaking out of the co-woven point, or the weaving point organizing separate two layers. The fabric was cut, and the thickness of one fabric layer, the stiffness, and the seam strength were measured according to above method. The stiffness measured was 1.18 kgf, the thickness of one fabric layer was 0.39 mm, and the seam strength was 1680 N. Furthermore, the initial maximum pressure was 64 KPa when the gas is injected therein with an instant pressure of 25 bar, and the pressure after 6 seconds was 47 KPa.

## Example 13

The double-layered fabric was prepared substantially according to the same method as in Example 12, except that polyamide multi-filaments having 315 denier were used.

At this time, the warp density and weft density were 60 yarns/inch, and the cover factor was 2,129. Subsequently, both faces of the double-layered fabric were coated with a silicone resin of 95 g/m² according to a common method in order to stop air from leaking out of the co-woven point, or the weaving point organizing separate two layers. The fabric was cut, and the thickness of one fabric layer, the stiffness, and the seam strength were measured according to above method. The stiffness measured was 0.6 kgf, the thickness of one fabric layer was 0.33 mm, and the seam strength was 1200 N. Furthermore, the initial maximum pressure was 60 KPa when the gas is injected therein with an instant pressure of 25 bar, and the pressure after 6 seconds was 32 KPa.

## Example 14

The double-layered fabric was prepared substantially according to the same method as in Example 12, except that the non-inflating part was composed of the stepwise co-woven weave where the double-layered weave and the 1X1 basket weave were co-woven stepwise and alternately as illustrated in Fig. 5.

The thickness of one fabric layer, the stiffness, and the seam strength were measured according to above method. The stiffness measured was 1.18 kgf, the thickness of one fabric layer was 0.39 mm, and the seam strength was 1680 N. Furthermore, the initial maximum pressure was 67 KPa when the gas is injected therein with an instant pressure of 25 bar, and the pressure after 6 seconds was 48 KPa.

## Example 15

The double-layered fabric was prepared substantially according to the same method as in Example 12, except that the weave of the left separated parts layers **A** of the non-inflating part centered on the co-woven point **C** was composed of the stepwise co-woven weave where the double-layered weave and the 3X3 basket weave were co-woven stepwise and alternately as illustrated in Fig. 5.

The thickness of one fabric layer, the stiffness, and the seam strength were measured according to above method. The stiffness measured was 1.18 kgf, the thickness of one fabric layer was 0.39 mm, and the seam strength was 1680 N. Furthermore, the initial maximum pressure was 66 KPa when the gas is injected therein with an instant pressure of 25 bar, and the pressure after 6 seconds was 46 KPa.

## Example 16

The double-layered fabric was prepared substantially according to the same method as in Example 12, except that the coated amount of the silicone resin was 75 g/m².

The thickness of one fabric layer, the stiffness, and the seam strength were measured according to above method. The stiffness measured was 1.13 kgf, the thickness of one fabric layer was 0.37 mm, and the seam strength was 1520 N. Furthermore, the initial maximum pressure was 62 KPa when the gas is injected therein with an instant pressure of 25 bar, and the pressure after 6 seconds was 36 KPa.

## Example 17

The double-layered fabric was prepared substantially according to the same method as in Example 13, except that the coated amount of the silicone resin was 75 g/m².

The thickness of one fabric layer, the stiffness, and the seam strength were measured according to above method. The stiffness measured was 0.58 kgf, the thickness of one fabric layer was 0.31 mm, and the seam strength was 1120 N. Furthermore, the initial maximum pressure was 54 KPa when the gas is injected therein with an instant pressure of 25 bar, and the pressure after 6 seconds was 26 KPa.

## Example 18

The double-layered fabric was prepared with polyamide multi-filaments having 420 denier as the warps and the wefts in a jacquard loom. The double-layered fabric was prepared so that the weave illustrated in Fig. 1 was used to the separate two layers of the double-layered fabric, the co-woven part was composed of the 2X2 warp rib weave (Fig. 4a) and the 2X2 weft rib weave (Fig. 4d) as illustrated in Fig. 4, and the non-inflating part was composed of the stepwise co-woven weave where the double-layered weave and the 2X2 basket weave were co-woven stepwise and alternately as illustrated in Fig. 5.

At this time, the warp density was 57 yarns/inch, the weft density was 49 yarns/inch, and the cover factor was 3,176. Subsequently, both faces of the double-layered fabric were coated with a silicone resin of 95 g/m$^2$ according to a common method in order to stop air from leaking out of the co-woven point, or the weaving point organizing separate two layers. The fabric was cut, and the thickness of one fabric layer, the stiffness, and the seam strength were measured according to above method. The stiffness measured was 1.18 kgf, the thickness of one fabric layer was 0.39 mm, and the seam strength was 1580 N. Furthermore, the initial maximum pressure was 58 KPa when the gas is injected therein with an instant pressure of 25 bar, and the pressure after 6 seconds was 38 KPa.

### Example 19

The double-layered fabric was prepared substantially according to the same method as in Example 18, except that polyamide multi-filaments having 315 denier were used.

At this time, the warp density and weft density were 60 yarns/inch, and the cover factor was 2,129. Subsequently, both faces of the double-layered fabric were coated with a silicone resin of 95 g/m$^2$ according to a common method in order to stop air from leaking out of the co-woven point, or the weaving point organizing separate two layers. The fabric was cut, and the thickness of one fabric layer, the stiffness, and the seam strength were measured according to above method. The stiffness measured was 0.6 kgf, the thickness of one fabric layer was 0.33 mm, and the seam strength was 1030 N. Furthermore, the initial maximum pressure was 52 KPa when the gas is injected therein with an instant pressure of 25 bar, and the pressure after 6 seconds was 26 KPa.

### Example 20

The double-layered fabric was prepared substantially according to the same method as in Example 18, except that the non-inflating part was composed of the 3X3 warp rib weave (Fig. 4b) and the 3X3 weft rib weave (Fig. 4e) as illustrated in Fig. 4.

The thickness of one fabric layer, the stiffness, and the seam strength were measured according to above method. The stiffness measured was 1.18 kgf, the thickness of one fabric layer was 0.39 mm, and the seam strength was 1590 N. Furthermore, the initial maximum pressure was 56 KPa when the gas is injected therein with an instant pressure of 25 bar, and the pressure after 6 seconds was 39 KPa.

### Example 21

The double-layered fabric was prepared substantially according to the same method as in Example 18, except that the non-inflating part was composed of the stepwise co-woven weave where the double-layered weave as illustrated in Fig. 1 and the 1X1 basket weave were co-woven stepwise and alternately.

The thickness of one fabric layer, the stiffness, and the seam strength were measured according to above method. The stiffness measured was 1.18 kgf, the thickness of one fabric layer was 0.39 mm, and the seam strength was 1580 N. Furthermore, the initial maximum pressure was 56 KPa when the gas is injected therein with an instant pressure of 25 bar, and the pressure after 6 seconds was 38 KPa.

### Example 22

The double-layered fabric was prepared substantially according to the same method as in Example 18, except that the weave of the left part of separated layers **A** of the non-inflating part centered on the co-woven point **C** was composed of the stepwise co-woven weave where the double-layered weave and the 3X3 basket weave were co-woven stepwise and alternately as illustrated in Fig. 5.

The thickness of one fabric layer, the stiffness, and the seam strength were measured according to above method. The stiffness measured was 1.18 kgf, the thickness of one fabric layer was 0.39 mm, and the seam strength was 1580 N. Furthermore, the initial maximum pressure was 56 KPa when the gas is injected therein with an instant pressure of 25 bar, and the pressure after 6 seconds was 35 KPa.

### Example 23

The double-layered fabric was prepared substantially according to the same method as in Example 18, except that the coated amount of the silicone resin was 75 g/m$^2$.

The thickness of one fabric layer, the stiffness, and the seam strength were measured according to above method. The stiffness measured was 1.13 kgf, the thickness of one fabric layer was 0.37 mm, and the seam strength was 1540 N. Furthermore, the initial maximum pressure was 52 KPa when the gas is injected therein with an instant pressure of 25 bar, and the pressure after 6 seconds was 27 KPa.

**Example 24**

The double-layered fabric was prepared substantially according to the same method as in Example 19, except that the coated amount of the silicone resin was 75 g/m$^2$.

The thickness of one fabric layer, the stiffness, and the seam strength were measured according to above method. The stiffness measured was 0.58 kgf, the thickness of one fabric layer was 0.31 mm, and the seam strength was 1020 N. Furthermore, the initial maximum pressure was 54 KPa when the gas is injected therein with an instant pressure of 25 bar, and the pressure after 6 seconds was 26 KPa.

**Example 25**

The double-layered fabric was prepared substantially according to the same method as in Example 20, except that the coated amount of the silicone resin was 75 g/m$^2$.

The thickness of one fabric layer, the stiffness, and the seam strength were measured according to above method. The stiffness measured was 1.13 kgf, the thickness of one fabric layer was 0.37 mm, and the seam strength was 1420 N. Furthermore, the initial maximum pressure was 56 KPa when the gas is injected therein with an instant pressure of 25 bar, and the pressure after 6 seconds was 27 KPa.

**Example 26**

The double-layered fabric was prepared with polyamide multi-filaments having 420 denier as the warps and the wefts in a jacquard loom. The double-layered fabric was prepared so that the weave illustrated in Fig. 1 was used to the separate two layers of the double-layered fabric, the irregular basket weave composed of the 2X2 basket weave, the 2X2 warp rib weave, the 2X2 weft rib weave, and the 1X1 plain weave as illustrated in Fig. 4 were used to the co-woven part, and the non-inflating part was composed of the stepwise co-woven weave where the double-layered weave and the 2X2 basket weave were co-woven stepwise and alternately as illustrated in Fig. 6.

At this time, the warp density was 57 yarns/inch, the weft density was 49 yarns/inch, and the cover factor was 3,176. Subsequently, both faces of the double-layered fabric were coated with a silicone resin of 95 g/m$^2$ according to a common method in order to stop air from leaking out of the co-woven point, or the weaving point organizing separate two layers. The fabric was cut, and the thickness of one fabric layer, the stiffness, and the seam strength were measured according to above method. The stiffness measured was 1.18 kgf, the thickness of one fabric layer was 0.39 mm, and the seam strength was 1560 N. Furthermore, the initial maximum pressure was 60 KPa when the gas is injected therein with an instant pressure of 25 bar, and the pressure after 6 seconds was 39 KPa.

**Example 27**

The double-layered fabric was prepared substantially according to the same method as in Example 26, except that polyamide multi-filaments having 315 denier were used.

At this time, the warp density and weft density were 60 yarns/inch, and the cover factor was 2,129. Subsequently, both faces of the double-layered fabric were coated with a silicone resin of 95 g/m$^2$ according to a common method in order to stop air from leaking out of the co-woven point, or the weaving point organizing separate two layers. The fabric was cut, and the thickness of one fabric layer, the stiffness, and the seam strength were measured according to above method. The stiffness measured was 0.6 kgf, the thickness of one fabric layer was 0.33 mm, and the seam strength was 1110 N. Furthermore, the initial maximum pressure was 50 KPa when the gas is injected therein with an instant pressure of 25 bar, and the pressure after 6 seconds was 27 KPa.

**Example 28**

The double-layered fabric was prepared substantially according to the same method as in Example 26, except that the irregular basket weave composed of the 3X3 basket weave, the 3X3 warp rib weave, the 3X3 weft rib weave, and the 1X1 plain weave as illustrated in Fig. 4 were used to the co-woven part.

The thickness of one fabric layer, the stiffness, and the seam strength were measured according to above method. The stiffness measured was 1.18 kgf, the thickness of one fabric layer was 0.39 mm, and the seam strength was 1580 N. Furthermore, the initial maximum pressure was 59 KPa when the gas is injected therein with an instant pressure of 25 bar, and the pressure after 6 seconds was 36 KPa.

**Example 29**

The double-layered fabric was prepared substantially according to the same method as in Example 26, except that the non-inflating part was composed of the stepwise co-woven weave where the double-layered weave and the 1X1 basket weave were co-woven stepwise and alternately as illustrated in Fig. 6.

The thickness of one fabric layer, the stiffness, and the seam strength were measured according to above method. The stiffness measured was 1.18 kgf, the thickness of one fabric layer was 0.39 mm, and the seam strength was 1580 N. Furthermore, the initial maximum pressure was 56 KPa when the gas is injected therein with an instant pressure of 25 bar, and the pressure after 6 seconds was 37 KPa.

**Example 30**

The double-layered fabric was prepared substantially according to the same method as in Example 26, except that the weave of the left part of separated layers **A** of the non-inflating part centered on the co-woven point **C** was composed of the stepwise co-woven weave where the double-layered weave and the 3X3 basket weave were co-woven stepwise and alternately as illustrated in Fig. 6.

The thickness of one fabric layer, the stiffness, and the seam strength were measured according to above method. The stiffness measured was 1.18 kgf, the thickness of one fabric layer was 0.39 mm, and the seam strength was 1580 N. Furthermore, the initial maximum pressure was 58 KPa when the gas is injected therein with an instant pressure of 25 bar, and the pressure after 6 seconds was 36 KPa.

**Example 31**

The double-layered fabric was prepared substantially according to the same method as in Example 26, except that the coated amount of the silicone resin was 75 g/m$^2$.

The thickness of one fabric layer, the stiffness, and the seam strength were measured according to above method. The stiffness measured was 1.13 kgf, the thickness of one fabric layer was 0.37 mm, and the seam strength was 1540 N. Furthermore, the initial maximum pressure was 52 KPa when the gas is injected therein with an instant pressure of 25 bar, and the pressure after 6 seconds was 29 KPa.

**Example 32**

The double-layered fabric was prepared substantially according to the same method as in Example 27, except that the coated amount of the silicone resin was 75 g/m$^2$.

The thickness of one fabric layer, the stiffness, and the seam strength were measured according to above method. The stiffness measured was 0.58 kgf, the thickness of one fabric layer was 0.31 mm, and the seam strength was 1090 N. Furthermore, the initial maximum pressure was 51 KPa when the gas is injected therein with an instant pressure of 25 bar, and the pressure after 6 seconds was 26 KPa.

**Example 33**

The double-layered fabric was prepared substantially according to the same method as in Example 28, except that the coated amount of the silicone resin was 75 g/m$^2$.

The thickness of one fabric layer, the stiffness, and the seam strength were measured according to above method. The stiffness measured was 1.13 kgf, the thickness of one fabric layer was 0.37 mm, and the seam strength was 1420 N. Furthermore, the initial maximum pressure was 53 KPa when the gas is injected therein with an instant pressure of 25 bar, and the pressure after 6 seconds was 26 KPa.

**Comparative Example 3**

The double-layered fabric was prepared substantially according to the same method as in Example 6, except that the weave of the left part of separated layers **A** of the non-inflating part centered on the co-woven point **C** was only composed of the 1X1 basket weave without using the stepwise co-woven weave, but it was impossible to weave the fabric because the weaving tension was excessively high (weaving efficiency was 50% or less).

### Comparative Example 4

The double-layered fabric was prepared substantially according to the same method as in Example 6, except that the weave of the left part of separated layers **A** of the non-inflating part centered on the co-woven point **C** was only composed of the double-layered weave same to the inflating part without using the stepwise co-woven weave.

The initial maximum pressure was 54 KPa when the gas is injected therein with an instant pressure of 25 bar, and the pressure after 6 seconds was 22 KPa. At this time, it was shown that the internal pressure after 6 seconds considerably decreases, and there may be a problem of inferior performance to protect passengers when it is used to a car airbag.

### Comparative Example 5

The double-layered fabric was prepared substantially according to the same method as in Example 12, except that the non-inflating part was only composed of the 1X1 basket weave without using the stepwise co-woven weave, but it was impossible to weave the fabric because the weaving tension was excessively high (weaving efficiency was 50% or less).

### Comparative Example 6

The double-layered fabric was prepared substantially according to the same method as in Example 12, except that the non-inflating part was only composed of the double-layered weave without using the stepwise co-woven weave.

The thickness of one fabric layer, the stiffness, and the seam strength were measured according to above method. The stiffness measured was 1.18 kgf, the thickness of one fabric layer was 0.39 mm, and the seam strength was 1680 N. Furthermore, the initial maximum pressure was 60 KPa when the gas is injected therein with an instant pressure of 25 bar, and the pressure after 6 seconds was 23 KPa. At this time, it was shown that the internal pressure after 6 seconds considerably decreases, and there may be a problem of inferior performance to protect passengers when it is used to a car airbag.

### Comparative Example 7

The double-layered fabric was prepared substantially according to the same method as in Example 18, except that the non-inflating part was only composed of the 1X1 basket weave without using the stepwise co-woven weave, but it was impossible to weave the fabric because the weaving tension was excessively high (weaving efficiency was 50% or less).

### Comparative Example 8

The double-layered fabric was prepared substantially according to the same method as in Example 18, except that the non-inflating part was only composed of the double-layered weave without using the stepwise co-woven weave.

The thickness of one fabric layer, the stiffness, and the seam strength were measured according to above method. The stiffness measured was 1.18 kgf, the thickness of one fabric layer was 0.39 mm, and the seam strength was 1580 N. Furthermore, the initial maximum pressure was 54 KPa when the gas is injected therein with an instant pressure of 25 bar, and the pressure after 6 seconds was 21 KPa. At this time, it was shown that the internal pressure after 6 seconds considerably decreases, and there may be a problem of inferior performance to protect passengers when it is used to a car airbag.

### Comparative Example 9

The double-layered fabric was prepared substantially according to the same method as in Example 26, except that the non-inflating part was only composed of the 1X1 basket weave without using the stepwise co-woven weave, but it was impossible to weave the fabric because the weaving tension was excessively high (weaving efficiency was 50% or less).

### Comparative Example 10

The double-layered fabric was prepared substantially according to the same method as in Example 26, except that the non-inflating part was only composed of the double-layered weave without using the stepwise co-woven weave.

The thickness of one fabric layer, the stiffness, and the seam strength were measured according to above method. The stiffness measured was 1.18 kgf, the thickness of one fabric layer was 0.39 mm, and the seam strength was 1560 N. Furthermore, the initial maximum pressure was 51 KPa when the gas is injected therein with an instant pressure of 25 bar, and the pressure after 6 seconds was 20 KPa. At this time, it was shown that the internal pressure after 6 seconds considerably decreases, and there may be a problem of inferior performance to protect passengers when it is used to a car airbag.

As shown above, the present invention can prevent the weave pattern of the co-woven part consisting of 4 or more pixels being inserted abnormally and can provide the double-layered fabric and the airbag having superior performances by improving the properties of the internal pressure maintaining property and the like, by effectively controlling the starting pixel of the co-woven weave in the whole fabric, according to the method of drawing a primary design of each weave of the inflating part, the non-inflating part, and the co-woven part with a magnification of 1/2 of the whole weave, and applying the primary design to a weaving process by magnifying the same 2 times.

Furthermore, the present invention can provide the double-layered fabric and the airbag having superior performances by improving the properties of the internal pressure maintaining property of the double-layered fabric and the like, because the gas leaking from the co-woven part can be blocked when the airbag is inflated by the gas by organizing the weave of the non-inflating part into the stepwise co-woven weave that is co-woven stepwise and alternately.

While the present invention has been described in detail with reference to the preferred embodiments, those skilled in the art will appreciate that various modifications and substitutions can be made thereto without departing from the spirit and scope of the present invention as set forth in the appended claims.

**Claims**

1. An inflatable double-layered fabric, including
an inflating part having gas inflatability;
a non-inflating part supporting the inflating part; and
a co-woven part constituting a boundary between the inflating part and the non-inflating part,
wherein the inflating part is composed of two separated fabric layers, and the non-inflating part includes a stepwise co-woven weave that is co-woven stepwise and alternately, and the weave of the co-woven part includes a 2X2 weave, a 3X3 weave, a stain weave, a partially co-woven weave of two separated fabric layers, or a mixed weave of at least one thereof, which is co-woven with 13 or more yarns in at least one direction.

2. The inflatable double-layered fabric according to Claim 1, wherein the stepwise co-woven weave is co-woven stepwise and alternately with two separated fabric layers, and
a weave selected from the group consisting of a 1X1 weave, a 2X2 weave, a 3X3 weave, a stain weave, a partially co-woven weave of double-layered fabric, and a mixed weave of at least one thereof.

3. The inflatable double-layered fabric according to Claim 1, wherein the stiffness of one fabric layer constituting the double-layered fabric is 3.5 kgf or less.

4. The inflatable double-layered fabric according to Claim 1, wherein the thickness of one fabric layer constituting the double-layered fabric is 0.5 mm or less.

5. The inflatable double-layered fabric according to Claim 1, wherein the cover factor of one fabric layer constituting the double-layered fabric is 1900 or more, according to the following Calculation Formula 1:

Calculation Formula 1

$$\text{Cover Factor (CF)} = \text{warp density (yarns/inch)} \times \sqrt{(\text{warp denier})} + \text{weft density (yarns/inch)} \times \sqrt{(\text{weft denier})}.$$

6. The inflatable double-layered fabric according to Claim 1, wherein the initial maximum pressure in the inflating part is 40 KPa or more when a gas is injected therein with an instant pressure of 25 bar, the pressure after 6 seconds is 25 KPa or more, the seam strength of the co-woven part is 1000 N or more, and the elongation at break is 50% or less.

7.  The inflatable double-layered fabric according to Claim 1, further including a resin coating layer on the face of the fabric.

8.  The inflatable double-layered fabric according to Claim 7, wherein the resin coating layer includes a silicone resin, a urethane resin, or a mixture thereof.

9.  The inflatable double-layered fabric according to Claim 7, wherein the amount of the resin coated on one side of the double-layered fabric is 30 g/ m$^2$ to 150 g/ m$^2$.

10. Airbag for vehicles including the inflatable double-layered fabric according to any one of Claims 1 to 9.

## Fig. 1

(a)                                          (b)

# Fig. 2a

A          C          B

# Fig. 2b

A     C     B

**Fig. 3a**

**Fig. 3b**

# Fig. 4

(a)

(b)

# Fig. 5

(a)

(b)

# Fig. 6

(a)

(b)

# Fig. 7

(a)

(b)

# Fig. 8

(a)

(b)

(c)

# Fig. 9

(a)

(b)

# Fig. 10

(a)  (b)  (c)  (d)  (f)  (g)

## Fig. 11

weft rib weave

warp rib weave

warp rib weave

basket weave

plain weave

weft rib weave

## Fig. 12

(a)

(b)

(c)

(d)

# Fig. 13